# EUROPEAN PATENT APPLICATION

(11) **EP 3 651 052 A1**
(43) Date of publication of application: **13.05.2020**
(21) Application number: 18205437.9
(22) Date of filing: 09.11.2018
(51) Int. Cl.: G06F 21/74, H04L 29/06

(54) **SECURE USE OF DUAL NETWORKS**

(71) Applicant: Drosch, Klaus, 164 79 Kista (SE)
(72) Inventor: Drosch, Klaus, 164 79 Kista (SE)
(74) Representative: Brann AB

(57) **Abstract**

The proposed technology relates to a method carried out by a computer system (10) comprising a computer networking hardware (12) for communicating in a first network (20) and in a second network (22). The method comprises: emulating (102) a first system virtual machine (28), and emulating (104) a second system virtual machine (30). The first system virtual machine (28) provides a first virtual platform that supports the execution of a complete first operating system (40), and the first system virtual machine (28) is configured to communicate in the first network (20). The second system virtual machine (30) provides a second virtual platform that supports the execution of complete second operating system (42), and the second system virtual machine (30) is configured to communicate in the second network (22).

## Description

### Technical field

The proposed technology generally relates to the field of computer security. Further, the proposed technology relates specifically to the field of network and Internet security

### Background

Computer security is a growing field due to the increasing reliance on computer systems, the Internet and wireless networks, such as Wi-Fi. There are numerous security threats, and the nature of the threats varies greatly.

There may be secret information on a computer system or distributed in a network. The owner of the secret information does not want it to be revealed or distributed to a person not having clearance for the information, to a third party not cleared for the information, or to the public. In the simplest scenario, an organization has secret information on a computer system or a local network internal to the organization that it does not want to disclose to the public. A number of people working in the organization need access to the secret information on a regular basis. The same people also need access to a wider network extending outside the organization, such as the Internet. A number of threats can then be identified.

Malicious software (malware or badware) can be downloaded via the wider network, such as viruses, Trojan horses, spyware, and worms to a computer system, such as a personal computer. The malicious software can affect the computer system to reveal the secret information. For example, a virus can take over a computer system and in extension the local network it is connected to, and report secret information outside the organization. In another example, spyware can monitor activity on a computer system, and in extension in the local network it is connected to, and report the activity to others outside the organization.

A user inside the organization with access to the computer system may act to send secret information outside the organization via the wider network, either on purpose or by mistake. For example, the user may have been subjected to social engineering, such as phishing, convincing the user to disclose the secret information.

Improving the security of a computer system and a local network it is connected to for the purpose of preventing secret information being distributed via a wider network typically limits the accessibility to the wider network. This means that there is a balance between security and accessibility to the wider network. There is a need for a technology that is well balanced with respect to security and accessibility to the wider network. In particular, there is a need for a user friendly technology that allows a user to have access to both secret information and a wider network, without risking the secret information being disclosed or exposed to external threats, such as such as malicious software.

### Objects

The proposed technology aims at obviating the disadvantages and failings of known techniques, and at meeting the needs described above.

### Summary

According to a first aspect of the proposed technology, a method is provided that is carried out by a computer system comprising a computer networking hardware, or device, for communicating in a first network and in a second network. The method comprises emulating a first system virtual machine and emulating a second system virtual machine. The first system virtual machine provides a first virtual platform that supports the execution of a complete first operating system, and the first system virtual machine is configured to communicate in the first network. The second system virtual machine provides a second virtual platform that supports the execution of complete second operating system, and wherein the second system virtual machine is configured to communicate in the second network.

Here, the first system virtual machine and the second system virtual machine can be emulated simultaneously.

According to a second aspects the proposed technology, a computer system, or work station, is provided that comprises: a computer processor for executing program instructions, a computer memory for storing information, a computer networking hardware, or device, for communicating in a first network and in a second network. The computer memory stores, or comprises, program instructions that, when executed by the computer processor, cause the computer system to carry out the method according to the first aspect of the proposed technology. The computer system may further comprise a hardware interface operationally connecting the computer processor, computer memory and computer networking hardware, and/or a user interface for interaction between a user and the computer system.

According to a third aspects the proposed technology, a computer program product is provided comprising program instructions, or computer code, that, when executed by a computer system comprising a computer networking hardware, or device, for communicating in a first network and in a second network, cause the computer system to carry out the method according to the first aspect of the proposed technology.

According to a fourth aspect the proposed technology, a computer-readable data carrier is provided having stored thereon the computer program product according to the third aspect of the proposed technology.

According to a fifth aspect the proposed technology, a data carrier signal is provided carrying the computer program product according the third aspect of the proposed technology.

The computer processor, computer memory, computer networking hardware, hardware interface, and user interface are all physical elements of the computer system. For example the computer processor may be a physical computer processor, such as a Central Processing Unit (CPU). The computer networking hardware is here understood to encompass a modem. The first network may be regarded as a secure network in which users may have access to secret information. The second network may be regarded as an unsecure network through which the secret information should not be distributed or sent. The hardware interface is here understood to encompass, or comprise, a Printed Circuit Board (PCB). The user interface is understood to encompass a Human-Machine Interface (HMI) such as a Graphical User Interface (GUI). It may be connected to the computer system via the hardware interface. The features described here limit the computer system to a non-distributed system located at a single location, such as a personal computer, and exclude network and cloud systems.

The first network and the second network are understood to be different networks. System virtual machines are understood to share and manage hardware, allowing for multiple environments which are isolated from one another that exist in the same computer system. This is in contrast to process virtual machines designed to execute computer programs in a platform-independent environment.

The computer processor, computer memory, and the hardware interface may constitute, or form part of, a host machine. For example, the host machine may be a personal computer. The first system virtual machine and the second system virtual machine may each constitute a guest machine on the host machine.

The first system virtual machine and the second system virtual machine may operate independently from one another. This means that one of the virtual machines is not emulated within the other virtual machine.

The simultaneous emulation of the first system virtual machine and the second system virtual machine allows for the user to swiftly change between the two system virtual machines, which contributes to a user friendly operation.

The first system virtual machine may be configured to not be able to communicate in the second network. Similarly, the second system virtual machine may be configured to not be able to communicate in the first network.

The first system virtual machine may have access to information that is not intended to be shared over the second network. The first system virtual machine can be regarded as a secure system virtual machine and the second system virtual machine can be regarded as an unsecure system virtual machine. Thus, the proposed computer system prevents information in the first network from being distributed in the second network in via the computer system, either intentionally by a user, or by malicious software installed on one of the system virtual machines. Additionally, one of the system virtual machines is not exposed to risks associated with the network the other system virtual machine is connected to. The risks can include external threats such as malicious software, denial-of-service attacks, and phishing.

### Detailed description

The method according to the proposed technology may further comprise operating a virtual machine monitor, control program, or hypervisor, that operates the first system virtual machine and the second system virtual machine. The virtual machine monitor is understood to encompass a control program or hypervisor. It may comprise computer software, or program instructions, that creates and runs system virtual machines. The virtual machine monitor may be a native or bare-metal hypervisor running directly on the computer system or host machine. This means that virtual machine monitor is a hardware-assisted virtualization on the host machine. Alternatively, the virtual machine monitor may be a hosted hypervisor running as an application in a host, or master, operating system. In yet another alternative, the virtual machine monitor may be a combination of a native or bare-metal hypervisor and a hosted hypervisor. For example, a bare-metal operating system may provide hardware-assisted virtualization support built into its kernel, such as the Linux kernel. The Linux based operating system may further have setup and control software that runs as applications in the operating system and assists the virtualization.

The method may further comprise operating a file sharing server providing a computer storage space, emulating a first internal virtual network connecting the first system virtual machine to the file sharing server, or to the host machine, and providing the first system virtual machine with access to the computer storage space. The method may further comprise emulating a second internal virtual network connecting the second system virtual machine to the file sharing server, or to the host machine, and providing the second system virtual machine with access to the computer storage space. The file sharing server is here understood as a computer program running on the host machine. Alternatively, the file sharing server may be a computer program running on the first system virtual machine or the second system virtual machine.

The proposed file sharing server allows for information to be shared between the first system virtual machine and the second system virtual machine internally within the computer system, which contributes to improved user flexibility. For example, information, such as a text document or an image, can be generated in the second system virtual machine and quickly transferred to the first system virtual machine via the file sharing server.

Each of the first internal virtual network and the second internal virtual network may be separate, or independent, from one another, and/or from the first network and second network. The computer storage space may be mounted on a different partition than program instructions that, when executed by the computer processor, causes the computer system to operate the virtual machine monitor. This contributes to an improved security in that it will be harder for malicious software in the computer storage space to interfere with the program instructions.

The first system virtual machine may have read access and no write access to the computer storage space, and the second system virtual machine may have write access to the computer storage space. This means that information on the second system virtual machine can be transferred to the first system virtual machine, but not in the opposite direction, which contributes to an improved security with respect to secret information in the first network. In one scenario, the first system virtual machine has access to secret information via the second network. However, the second system virtual machine connected to the presumably unsecure second network has not access to the secret information from the first network, or information stored on the first system virtual machine, due to the restrictions in access to the computer storage space.

The second system virtual machine may have no read access to the computer storage space. This further contributes to improving the security, should there be any leak of information to the computer storage space from the first network. Alternatively, the second system virtual machine may have read access to the computer storage space, which allow for a user to access the computer storage space via the second system virtual machine.

With the computer system comprising a user interface for interaction between a user and the computer system, the method may further comprise operating the computer system in a first mode in which user interactions with the first system virtual machine via the user interface are enabled, and alternatively operating the computer system in a second mode in which user interactions with the second system virtual machine via the user interface are enabled. In one alternative, in the first mode, no user interactions with the second system virtual machine are enabled, and/or in the second mode, no user interactions with the first system virtual machine are enabled. This means that a user interacts with one of the system virtual machines at the time, even though the first system virtual machine and the second system virtual machine are operating simultaneously or in parallel, which reduces the risk of a user giving a command intended to one of the system virtual machines by mistake being made with respect to the other system virtual machine.

The method may further comprise changing between the first mode and the second mode at the input of a predetermined command from the user via the user interface. The predetermined command may for example be a specific key combination entered on a computer keyboard of the user interface. This contributes to a more user friendly operation of the computer system.

Each of the first system virtual machine and the second system virtual machine may comprise a virtual computer storage comprising a first storage space and a second storage space, for example on a virtual hard disk drive. The first storage space may store, or comprise, program instructions that, when run on the system virtual machine, provide a guest operating system on the system virtual machine. The guest operating system may be configured to, if a change is made to a file of the program instructions providing the guest operating system, or to a file in the first storage space, store the changed file, or a file providing the change, in the second storage space. This means that files important to the guest operating system in the first storage space are never modified. When a write request is made to such files, it is redirected away from the first storage space to the second storage space.

The guest operating system may be configured to display the virtual computer storage to the guest operating system as a single storage space that stores, or comprises, all, or any, unchanged and changed files of the program instructions providing the guest operating system. Restoring the operating system on the system virtual machine is then just a matter of discarding the changes file, or the file providing the change, in the second storage space. Each of the first system virtual machine and the second system virtual machine may be configured to restore the operating system only when the system virtual machine is not running.

The virtual computer storage may comprise a plurality of virtual partitions, and the file of the program instructions providing the guest operating system and the changes file, or the file provide the change, may be stored on the same virtual partition. Alternatively or additionally, the (physical) computer memory of the computer system may comprise a plurality of partitions, and the file of the program instructions providing the guest operating system and the changes file, or the file provide the change, may be stored on the same partition. This contributes to an improved access speed.

In one alternative, the first network is not connected to the Internet and the second network is connected to the Internet. Additionally or alternatively, the first network may use wired data connections between network nodes and the second network may use wireless data connections between network nodes. It is significantly easier to hack a wireless data connection than a wired data connection, and the proposed technology contributes to an improved security. The first network may be a Local Area Network (LAN), which is understood to encompass a Home Area Network (HAN), a Storage Area Network (SAN). The second network may be a Wireless Area Network (WLAN), a Wide Area Network (WAN), an Internet area network (IAN), or the Internet.

The user interface may be a graphical user interface (GUI) including a tactile user interface, such as a computer keyboard, and a visual user interface capable of displaying graphics, such as a computer monitor.

### Brief description of the drawings

A more complete understanding of the abovementioned and other features and advantages of the proposed technology will be apparent from the following detailed description of preferred embodiments in conjunction with the appended drawings, wherein:
- Fig. 1: is a schematic view of a computer system,
- Fig. 2: is a schematic flow chart illustrating a method implemented by the computer system of Fig. 1,
- Fig. 3: is a schematic view of a program structure, and
- Fig. 4: is a schematic view of an alternative program structure.

### Description of the drawings

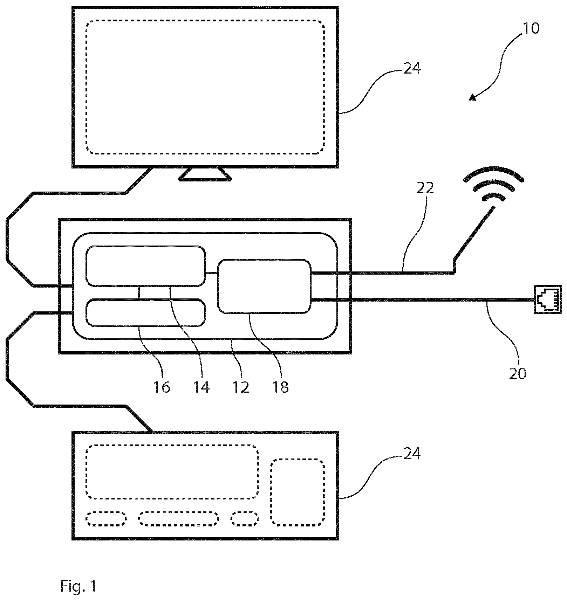

Fig. 1 illustrates a schematic view of a computer system 10 in the form of a personal computer. The computer system 10 has a hardware interface 12 operationally connecting a computer processor 14 in the form of a Central Processing Unit (CPU), computer memory 16 in the form of a Hard Disk Drive (HDD), and computer networking hardware 18 in the form of a modem. The computer networking hardware 18 can communicate in a first network 20 that is a LAN via an Ethernet cable, and in a second network 22 that is a WLAN via Wi-Fi antenna. The second network is in turn connected to the Internet. The computer system 10 further has a user interface 24 in the form of a computer keyboard and a computer monitor by which a user can interact with the computer system 10.

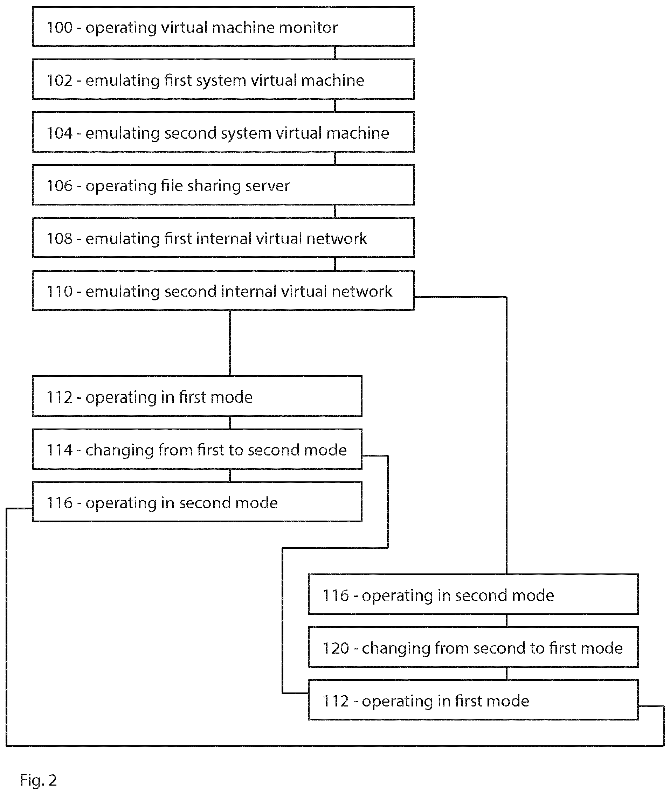

The computer memory stores program instructions that, when executed by the computer processor, cause the computer system to carry out the method illustrated in Fig. 2. This means that the computer memory 16 constitutes computer-readable data carrier storing a computer program product that when executed cause the computer system 10 to carry out the method.

The computer system 10 loads and operates 100 a virtual machine monitor 26, which is a control program that in turn can operate system virtual machines. The virtual machine monitor 26, and in extension the computer system 10, then loads and emulates 102 a first system virtual machine 28. It also loads and emulates 104 a second system virtual machine 30 simultaneous to the first system machine 28 being emulated 102. This means that the two system virtual machines 28 and 30 operate simultaneously or in parallel. The first system virtual machine 28 is configured such that it can communicate via the first network 20 and not via the second network 22. The second system virtual machine 30 is configured such that it can communicate via the second network 22 and not via the first network 20.

The computer system 10 then loads and operates 106 a file sharing server 32 providing a computer storage space 34 on the computer memory 16. It further emulates 108 a first internal virtual network 36 connecting the first system virtual machine 28 to the file sharing server 32. It also emulates 110 a separate second internal virtual network 38 connecting the second system virtual machine 30 to the file sharing server 32. This way, the system virtual machines 28 and 30 have access to the computer storage space 34.

The file sharing server 32 is set up such that the first system virtual machine 28 has read access and no write access to the computer storage space 34, and the second system virtual machine 30 has read access and write access to the computer storage space 34.

The virtual machine monitor 26, and in extension the computer system 10, is set up to operate in two modes. When operating 112 in the first mode the user interact only with the first system virtual machine 28 via the user interface 24, and when operating 116 in the second mode the user interact only with the second system virtual machine 30 via the user interface 24. This means that in the first mode, the user interface 24 displays information only relating to the first system virtual machine 28 via the computer monitor and receives input only to the first system virtual machine 28 via the computer keyboard, and vice versa.

The virtual machine monitor 26 is further set up to change between the first mode and the second mode at the input of a pre-determined command from the user via the computer keyboard of the user interface 24.

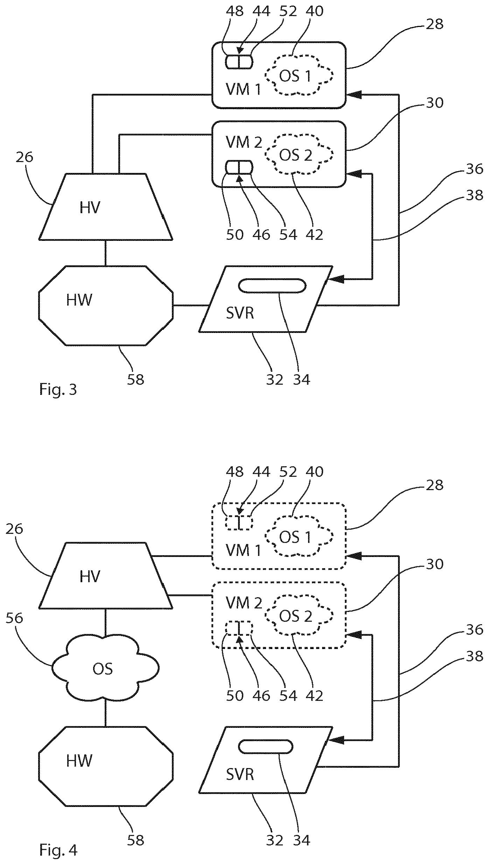

In one embodiment illustrated in Fig. 3, the virtual machine monitor 26 is a native or bare-metal hypervisor running on the hardware 58 of the computer system 10, and the resulting program structure is illustrated in Fig. 3. This means that the hardware 58 and the virtual machine monitor 26 constitute a host machine. The first system virtual machine 28 runs a first guest operating system 40, and the second system virtual machine 30 runs a second guest operating system 42.

In another embodiment illustrated in Fig. 4, a host, or master, operating system 56 runs on the hardware 38 of the computer system 10, and the virtual machine monitor 26 is a hosted hypervisor running as an application in the host operating system 56. This means that the hardware 58 and host operating system 56 constitutes a host machine. Similar to the earlier embodiment, the first system virtual machine 28 runs a first guest operating system 40, and the second system virtual machine 30 runs a second guest operating system 42.

In yet another embodiment, the virtual machine monitor is a combination of a native or bare-metal hypervisor and a hosted hypervisor.

In the different embodiments, each of the first and second system virtual machines 28 and 30 has a virtual, or emulated, computer storage 44 and 46 with a first storage space 48 and 50 and a second storage space 52 and 54 The first storage space 48 and 50 stores program instructions that when run on the system virtual machine 28 and 30, provides the host operating system 40 and 42. Each of the guest operating systems 40 and 42 is configured to, if a change is made to a file of the program instructions providing the guest operating system 40 and 42, or to a file in the first storage space 48 and 50, store the changed file, or a file providing the change, in the second storage space 52 and 54. Each of the guest operating systems 40 and 42 is configured to display the virtual computer storage 44 and 46 to the guest operating system 40 and 42 as a single storage space storing all files providing the guest operating system 40 and 42 with all changes implemented. Further, each of the guest operating systems 40 and 42 does not have write access to the first storage space 48 and 50, which means that it is configured to be unable to change a file of the program instructions providing the guest operating system 40 and 42 that are stored in the first storage space 48 and 50.

### Item list

- 10: computer system
- 12: hardware interface
- 14: computer processor
- 16: computer memory
- 18: computer networking hardware
- 20: first network
- 22: second network
- 24: user interface
- 26: virtual machine monitor
- 28: first system virtual machine
- 30: second system virtual machine
- 32: file sharing server
- 34: computer storage space
- 36: first internal virtual network
- 38: first internal virtual network
- 40: first guest operating system
- 42: second guest operating system
- 44: virtual computer storage
- 46: virtual computer storage
- 48: first storage space
- 50: first storage space
- 52: second storage space
- 54: second storage space
- 56: host operating system
- 58: hardware

## Claims

1. A method carried out by a computer system (10) comprising a computer networking hardware (12) for communicating in a first network (20) and in a second network (22), wherein the method comprises:
- emulating (102) a first system virtual machine (28), and
- emulating (104) a second system virtual machine (30),
wherein the first system virtual machine (28) provides a first virtual platform that supports the execution of a complete first operating system (40), and wherein the first system virtual machine (28) is configured to communicate in the first network (20), and
wherein the second system virtual machine (30) provides a second virtual platform that supports the execution of complete second operating system (42), and wherein the second system virtual machine (30) is configured to communicate in the second network (22).

2. The method according to claim 1, wherein method further comprises:
- operating (106) a file sharing server (32) providing a computer storage space (34),
- emulating (108) a first internal virtual network (36) connecting the first system virtual machine (28) to the file sharing server (32) and providing the first system virtual machine (28) with access to the computer storage space (34), and
- emulating (110) a second internal virtual network (38) connecting the second system virtual machine (30) to the file sharing server (32) and providing the second system virtual machine (30) with access to the computer storage space (34).

3. The method according to claim 2, wherein the first system virtual machine (28) has read access and no write access to the computer storage space (34), and the second system virtual machine (30) has write access to the computer storage space (34).

4. The method according to any of the claims 1 to 3, wherein the computer system (10) further comprises a user interface (24) for interaction between a user and the computer system (10), and wherein the method further comprises:
- operating (112) the computer system (10) in a first mode in which user interactions with the first system virtual machine (28) via the user interface (24) are enabled, or
- operating (116) the computer system (10) in a second mode in which user interactions with the second system virtual machine (30) via the user interface (24) are enabled.

5. The method according to claim 4, wherein method further comprises:
- changing (114) between the first mode and the second mode at the input of a pre-determined command from the user via the user interface (24).

6. The method according to any of the claims 1 to 5, wherein the method further comprises:
- operating (100) a virtual machine monitor (26) that operates the first system virtual machine (28) and the second system virtual machine (30).

7. The method according to any of the claims 1 to 6, wherein the first network (20) is not connected to the Internet and the second network (22) is connected to the Internet.

8. The method according to any of the claims 1 to 7, wherein each of the first system virtual machine (28) and the second system virtual machine (30) comprises a virtual computer storage (44, 46) comprising a first storage space (48, 50) and a second storage space (52, 54), and wherein the first storage space stores (48, 50) program instructions that, when run on the system virtual machine (28, 30), provides a guest operating system (40, 42) on the system virtual machine (28, 30), and wherein the guest operating system (40, 42) is configured to, if a change is made to a file of the program instructions providing the guest operating system (40, 42), or to a file in the first storage space (48, 50), store the changed file, or a file providing the change, in the second storage space (52, 54).

9. The method according to claim 8, wherein the guest operating system (40, 42) is configured to display the virtual computer storage (44, 46) to the guest operating system (40, 42) as a single storage space that stores, or comprises, all unchanged and changed files of the program instructions providing the guest operating system (40, 42).

10. The method according to any of the claims 8 or 9, wherein the guest operating system (40, 42) is configured to be unable to change a file of the program instructions providing the guest operating system that are stored in the first storage space (48, 50).

11. A computer system (10) comprising:
- a computer processor (14) for executing program instructions,
- a computer memory (16) for storing information, and
- a computer networking hardware (18) for communicating in a first network (20) and in a second network (22),
wherein the computer memory (16) stores program instructions that, when executed by the computer processor (14), cause the computer system (10) to carry out the method according to any of the claims 1-10.

12. A computer program product comprising program instructions that, when executed by a computer system (10) comprising a computer networking hardware (18) for communicating in a first network (20) and in a second network (22), cause the computer system to carry out the method according to any of the claims 1-10.

13. A computer-readable data carrier (16) having stored thereon the computer program product according to claim 12.

14. A data carrier signal carrying the computer program product according to claim 12.
